# FASCICULE DE BREVET EUROPEEN

(11) **EP 4 014 445 B1**
(45) Date de publication et mention de la délivrance du brevet: **06.09.2023**
(21) Numéro de dépôt: 20749906.2
(22) Date de dépôt: 04.08.2020
(51) Int. Cl.: H04L 47/10, H04W 28/02, H04W 74/04, H04W 74/08, H04W 84/18

(54) **PROCÉDÉ DE TRANSMISSION DE PAQUETS DE FLUX DE DONNÉES AU SEIN D'UN RÉSEAU DE COMMUNICATION SANS FIL**
VERFAHREN ZUR ÜBERTRAGUNG VON DATENSTROMPAKETEN IN EINEM DRAHTLOSEN KOMMUNIKATIONSNETZ
METHOD FOR TRANSMITTING DATA STREAM PACKETS WITHIN A WIRELESS COMMUNICATION NETWORK

(30) Priorité: 13.08.2019 FR 1909149
(43) Date de publication de la demande: 22.06.2022
(73) Titulaire: THALES, 92400 Courbevoie (FR)
(72) Inventeur: CIPRIANO, Antonio, 92622 GENNEVILLIERS CEDEX (FR); FAURE, David, 92622 GENNEVILLIERS CEDEX (FR); PIREZ, Didier, 92622 GENNEVILLIERS CEDEX (FR)
(74) Mandataire: Atout PI Laplace
(86) Numéro de dépôt international: PCT/EP2020/071916
(87) Numéro de publication internationale: WO 2021/028268

(56) Documents cités:
- FUJITSU: "Discussion on Uu-based NR sidelink resource allocation", 3GPP DRAFT; R1-1810594 DISCUSSION ON UU-BASED SIDELINK RESOURCE ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Chengdu, China; 20181008 - 20181012 28 septembre 2018 (2018-09-28), XP051518000, Extrait de l'Internet: URL:http://www.3gpp.org/ftp/tsg%5Fran/WG1% 5FRL1/TSGR1%5F94b/Docs/R1%2D1810594%2Ezip [extrait le 2018-09-28]
- MEDIATEK INC: "On sidelink resource allocation mechanism", 3GPP DRAFT; R1-1900199 ON SIDELINK RESOURCE ALLOCATION MECHANISM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Taipei, Taiwan; 20190121 - 20190125 20 janvier 2019 (2019-01-20), XP051593123, Extrait de l'Internet: URL:http://www.3gpp.org/ftp/Meetings%5F3GP P%5FSYNC/RAN1/Docs/R1%2D1900199%2Ezip [extrait le 2019-01-20]
- ERICSSON: "Radio Resource Management for NR Sidelink Communication", 3GPP DRAFT; R1-1809304 ERICSSON - RADIO RESOURCE MANAGEMENT FOR NR SIDELINK COMMUNICATION, 3RD GENERATION PARTNERSHIP PROJECT (3GPP), MOBILE COMPETENCE CENTRE ; 650, ROUTE DES LUCIOLES ; F-06921 SOPHI , vol. RAN WG1, no. Göteborg, Sweden; 20180820 - 20180824 10 August 2018 (2018-08-10), XP051516668, Retrieved from the Internet: URL:http://www.3gpp.org/ftp/tsg%5Fran/WG1% 5FRL1/TSGR1%5F94/Docs/R1%2D1809304%2Ezip [retrieved on 2018-08-10]

## Description

L'invention concerne un procédé de transmission de paquets de flux de données au sein d'un réseau de communication sans fil. Elle s'applique à la transmission point-multi-point généralement désigné ici sous le terme « multicast », un noeud du réseau souhaitant transmettre son message à plusieurs autres noeuds du réseau. Elle trouve aussi son application dans un réseau de communication fonctionnant en unicast et en diffusion ou broadcast.

Dans le domaine des transmissions, un ensemble de ressources est mis à disposition pour la propagation d'un paquet dans le réseau. Par exemple, dans un réseau à accès multiple à répartition dans le temps ou TDMA les ressources peuvent être les créneaux temporels. Dans un réseau à accès multiple par répartition en fréquence ou FDMA, les ressources sont des fréquences ; dans la technique à accès multiple par répartition en code ou COMA les ressources sont des codes d'étalement ; dans des systèmes à entrées multiple et sorties multiples ou MIMO, les ressources sont des faisceaux spatiaux et toute combinaison possible en fonction de la couche physique PHY et de la couche d'accès réseau ou MAC employée.

Multiplexer dans un réseau sans fil ad hoc mobile (Mobile Ad Hoc Network - MANET) plusieurs flux multicast constitue un problème technique dès que les ressources ne sont pas abondantes, ce qui est le cas dans les réseaux MANET actuels. Pour ce type de réseau, en général, il y a une augmentation des besoins en termes de débit, de nombre de services supportés, de nombre de noeuds qui sont simultanément servis dans le réseau, de diminution de latence, etc.

Pour pallier le manque de ressources, les réseaux MANETs actuels utilisent plusieurs canaux logiques en parallèle (sur des ressources orthogonales, qui assument des formes différentes selon la couche PHY et la couche MAC utilisées) et de l'allocation dynamique de ressources pour pouvoir exploiter aux mieux les ressources en fonction des besoins de trafic instantanés.

Cependant, des services avec des contraintes fortes de latence requièrent une gestion des ressources radios adaptée pour diminuer les temps d'allocation des ressources, puisque le délai d'allocation des ressources pèse directement sur la latence de bout-en-bout expérimentée au niveau du service par les utilisateurs finaux. Le problème du délai (ou temps) d'allocation est très important dans les réseaux MANET, puisque dans ce type de réseau les noeuds peuvent se trouver à plusieurs bonds les uns des autres (i.e. les noeuds sont reliés les uns les autres par d'autres noeuds du réseau qui relaient les messages) ce qui rend le problème d'allocation plus difficile et le retard d'allocation plus long que dans des réseaux où tous les noeuds sont connectés directement à un noeud central, comme dans les cellules d'un système cellulaire. Généralement le temps d'allocation des ressources augmente avec le nombre de noeud d'un réseau, il est donc difficile de maîtriser ce temps dans un réseau MANET. Cette maîtrise peut être obtenue par exemple à travers une pré-réservation des ressources, ou en préemptant des ressources directement disponibles pour le service à temps contraint ou en adoptant des mécanismes d'allocation de ressources très réactifs et rapides (par exemple en ayant des durées de créneaux temporels très courtes et des cycles d'allocation courts, comme dans la 5G civil). De plus, il est important, dans des communications point-multi-point au sein d'un réseau MANET caractérisé par une topologie hautement dynamique du fait de la mobilité de ses noeuds, d'avoir un protocole de diffusion multi-bond rapide et robuste aux changements topologiques. La technique de diffusion coopérative ou broadcast coopératif est une méthode de l'état de l'art qui possède ces caractéristiques. Pour terminer, un autre problème des réseaux MANET concerne la gestion de plusieurs flux à diffuser à toute ou plusieurs parties du réseau. Quand l'on souhaite doter le réseau MANET d'un canal logique en plus (pour la transmission de signalisation ou les données) ou élargir la capacité des canaux existants, l'approche classique consiste à ajouter une nouvelle fréquence/code/couche spatiale. Mais, le nombre de ressources fréquentielles/code/couches spatiales étant limité, il n'est pas toujours simple d'ajouter de nouveaux flux dans le réseau. Cela peut poser problème lorsque l'on souhaite par exemple, augmenter le nombre de noeuds du réseau (passage à l'échelle du réseau). De plus, si une partie des ressources est préréservée pour des services contraints en latence, l'ajout de nouveaux canaux logiques peut être plus complexe.

Le brevet US 4639937 présente la technique de relayage en avalanche qui utilise le principe du relayage en broadcast coopératif. L'idée de ce brevet est la suivante : une source transmet un message (une ou plusieurs fois) à travers un signal qui peut éventuellement être répété. Tous les noeuds du réseau qui reçoivent correctement le message réémettent ensemble le même signal sur les mêmes ressources (i.e. les créneaux ayant la même fréquence dans un système TDMA) préétablies. Les noeuds relais peuvent établir que le message est correct selon des méthodes connues de l'état de l'art comme l'ajout d'un code de contrôle de redondance cyclique ou CRC (Cyclic Redundancy Check) à l'émission qui est utilisé à la réception pour détecter des erreurs, ou alors selon des critères liés à la qualité du signal, ou à d'autres métriques (comme l'information mutuelle accumulée) utilisées ou calculées pendant le processus de décodage du message). Le brevet US 4639937 souligne qu'il est nécessaire d'avoir un temps réseau partagé (une synchronisation réseau) et les noeuds doivent être capables de gérer la réception de multiples copies du signal, puisque la technique génère, à un récepteur donné, un canal multi-trajet artificiel. Ce brevet, écrit dans le contexte des transmissions HF, généralise au cas multi-bond l'idée de la transmission sur fréquence unique utilisée dans le broadcast de la radio. Cette technique a donc l'avantage d'exploiter efficacement les ressources disponibles pour inonder le réseau, puisqu'elle a besoin d'un nombre de ressources égal au nombre des bonds et non au nombre des noeuds du réseau. Elle bénéficie aussi d'un gain de puissance (plusieurs émetteurs transmettent le même signal), et d'un gain de diversité spatiale (les différents liens entre les émetteurs et un récepteur donné) qui est transformé en diversité de trajet.

La publication de B. Zhao and M. C. Valenti, "Practical relay networks: A generalization of hybrid-arq," IEEE Journal on Selected Areas in Communications (Spécial Issue on Wireless Ad Hoc Networks), vol. 23, no. 1, pp 7-18, January 2005, et la publication de B. Zhao and M. C. Valenti, "Position-based relaying with hybrid-ARQ for efficient ad hoc networking," EURASIP Journal on Wireless Communications and Networking, 2005 décrivent une technique de type broadcast coopératif couplée avec de la redondance incrémentale. Dans Zhao, les ressources sont divisées en créneaux temporels. A partir du message, la source emploie une technique de codage canal pour générer un mot de code contenant de la redondance d'information caractérisée par un taux de codage compris entre 1 et M. Le mot de code représentant le message de la source est ensuite divisé en M parties, chacune est envoyée dans un créneau différent. Les noeuds récepteurs (qui sont des relais potentiels) écoutent pendant les créneaux alloués à la transmission et mettent en oeuvre une technique connue sous l'expression anglo-saxonne « code combining », c'est-à-dire que les noeuds accumulent l'information reçue dans tous les créneaux précédents jusqu'à arriver à décoder le message correctement. D'un point de vue pratique, cette accumulation d'information peut se faire, par exemple, en cumulant des rapports de vraisemblance logarithmique (Log-Likelihood Ratio - LLR) des bits codés du message avant décodage du code correcteur d'erreur. Pour un créneau donné, tous les noeuds qui ont été capables de décoder correctement le message, le recodent et participent à l'émission au créneau suivant. En plus de la stratégie de relayage simple (tout noeud qui a correctement décodé relaie), la publication propose aussi une activation intelligente des relais en fonction de leur position par rapport à la destination.

Les publications de B. Sirkeci-Mergen et A. Scaglione, "Coverage analysis of cooperative broadcast in wireless networks", in Proc. IEEE Workshop on Signal Processing and Advances in Wireless Communication, Lisbon, Portugal, Jul. 2004, pp. 16-20 et de Sirkeci-Mergen, A. Scaglione, et G. Mergen, "Asymptotic analysis of multistage cooperative broadcast in wireless networks", IEEE Transactions on Information Theory, vol. 52, no. 6, pp. 2531-2550, June 2006 révèlent aussi explicitement le fonctionnement du broadcast coopératif, où tous les noeuds participent à la retransmission simultanée du paquet reçu, dès que le paquet est reçu correctement (selon une métrique donnée, par exemple le niveau de Rapport Signal sur Bruit (Signal to Noise Ratio, (SNR) en anglais). Ces publications analysent aussi les performances du relayage en broadcast coopératif en fonction de la puissance d'émission et du seuil de décodage.

Le document de B. Sirkeci-Mergen et M. C. Gastpar, "On the broadcast capacity of wireless networks with cooperative relays", IEEE Transactions on Information Theory, vol. 56, no. 8, pp. 3847-3861, August 2010 évalue la capacité de diffusion de messages multicast par le relayage en broadcast coopératif.

Dans un contexte contraint en termes de ressources, soit par une disponibilité limitée au niveau système (par exemple, un nombre limitée de fréquences disponible pour le MANET), soit parce que les ressources sont allouées statiquement ou quasi-statiquement par exemple pour des raisons de contraintes de latence sur les services, quand le nombre de flux augmente. Une façon d'organiser leur accès aux ressources est d'introduire un accès aléatoire par compétition. L'accès en compétition est une méthode bien connue qui permet plusieurs communications sur les mêmes ressources et qui présente un intérêt dans le cadre des communications de quatrième Génération (4G) (par exemple pour les communications autonomes entre équipements mobiles, « device-to-device D2D ») et plus particulièrement de cinquième génération (5G), notamment pour les transmissions des objets (« machine type communications MTC » et « internet of things loT »), dans le cadre des communications cellulaires. Dans ce cadre, il est parfois préférable ne pas utiliser une méthode d'allocation orthogonale des ressources parce que les ressources sont limitées et le nombre de communications plus important (ou beaucoup plus important) que ce que des ressources orthogonales pourraient supporter. On se base alors sur le taux d'activité (en général faible) des objets et sur des motifs (signatures) d'allocation de ressources non orthogonales qui peuvent être aléatoires, déterministes ou un mélange des deux. Les deux publications de C. Boyd, R. Vehkalahti et O. Tirkkonen, "Combinatorial code designs for ultra-reliable loT Random access", in IEEE International Symposium on Personal, Indoor, and Mobile Radio Communications workshops (PIMRC 2017), Montreal, QC, Canada, 8-13 Oct. 2017 et "Interference Cancelling Codes for Ultra-Reliable Random Access", International Journal of Wireless Information Networks, Vol. 25, n° 4, pp 422-433, December 2018, présentent dans le cadre qui a été brièvement mentionné ci-dessus, des « codes » déterministes c'est-à-dire des ensembles de telles signatures.

Une autre technique utilisée dans le codage réseau (ou network coding en anglo-saxon) consiste en l'émission de combinaisons de paquets du réseau, tel que décrit dans le document de Christina Fragouli and Emina Soljanin, "Network Coding Fundamentals", NOW editor, Foundations and Trends in Networking, pag.1-133, Vol.2, N°1 (2007).

L'enseignement technique du document de Fujitsu intitulé "Discussion on Uu-based NR sidelink resource allocation", XP051518000, 28 septembre 2018, divulgue un procédé d'allocation de ressources, notamment d'allocation semi-statique de ressources et met en oeuvre des ressources configurées pour la préemption ou des ressources basées sur un mécanisme de partage.

L'enseignement technique de Mediatek Inc, intitulé "On sidelink resource allocation mechanism", 20 janvier 2019, XP05159312, décrit un procédé d'allocation de ressources.

Malgré les performances présentées par les méthodes de transmission connues de l'art antérieur, il reste quelques problèmes. Traditionnellement les ressources temps-fréquence pour la transmission d'un paquet d'un flux de données sont réservées de façon exclusive (dite aussi allocation « orthogonale ») pour éviter d'interférer avec d'autres flux et de recevoir ou générer de l'interférence. Les ressources peuvent éventuellement être réutilisées spatialement dans une autre zone du réseau où l'interférence produite par la première transmission (et respectivement l'interférence produite dans la nouvelle zone) est négligeable dans la deuxième zone (et respectivement dans la première zone).

Cependant, lorsque la transmission se fait sur plusieurs bonds et par plusieurs émetteurs concurrents, comme dans le cas du relayage par broadcast coopératif au sein d'un MANET, la zone d'interférence est plus importante que dans des transmissions point-à-point et cela peut gêner la réception d'un autre flux (sur les mêmes ressources) par des noeuds dans cette zone d'interférence. La réutilisation spatiale devient beaucoup plus contrainte et peut devenir impossible pour des réseaux pas très étendus.

De plus, dans l'état de l'art les ressources sont réservées à l'avance pour diminuer la latence de bout en bout. Ceci constitue un inconvénient, lorsqu'il n'y a pas de paquets à envoyer pour un certain flux, parce que les ressources sont inutilisées et donc l'utilisation des ressources n'est pas efficace.

L'un des objectifs du procédé selon l'invention est de proposer un procédé et un système permettant de traiter plusieurs flux multicast dans un réseau de type MANET avec du relayage coopératif, en particulier lorsque les flux de données à transmettre ont des priorités semblables, égales.

Dans la suite de la description, l'expression « flux » ou « flux multicast » est synonyme de « groupe multicast ». Les utilisateurs s'abonnent à des flux (ou groupes multicast) et utilisent les ressources correspondantes. On fait l'hypothèse suivante : un utilisateur n'écoute que les ressources allouées, i.e., avec pré réservation, aux flux/groupes multicast auxquels il est abonné.

De même, une unité de ressource d'allocation est désignée sous l'expression « Bloc de Ressource » ou RB. Par exemple, un bloc de ressources peut être un créneau temporel dans un système TDMA (Time Division Multiple Access), un code dans un système CDMA (Code Division Multiple Access) ou dérivé, une fréquence dans un système FDMA (Frequency Division Multiple Access), un bloc de sous-porteuses dans un système de type OFDMA (Orthogonal Frequency Division Multiple Access), une couche spatiale dans un système avec antennes multiples ou des combinaisons possibles de ces différents RB.

La solution proposée dans le procédé selon l'invention repose notamment sur un multiplexage de plusieurs flux dans les mêmes ressources du réseau en utilisant de l'accès en compétition avec des signatures d'allocation pour les flux. En maîtrisant les signatures d'allocation de ressources, les collisions peuvent être maîtrisées, voire évitées et les interférences effacées afin de réduire l'impact des collisions. Ceci permet une meilleure robustesse dans des transmissions coopératives utilisées pour la propagation des flux. Ainsi, un gain de débit total (et/ou de latence et/ou de nombre de flux en parallèle et donc de capacité réseau) est réalisé.

L'invention concerne un procédé de transmission de paquets de flux de données au sein d'un réseau de communication sans fil, ledit réseau de communication sans fil comprenant plusieurs noeuds abonnés à un ou plusieurs flux Fi et partageant une ou plusieurs ressources RBi pour la transmission de ces flux avec des possibilités de collision, un ou plusieurs noeuds jouant un rôle de source d'émission de paquets d'un ou plusieurs flux différents, chaque flux Fi ayant une signature Si d'allocation de ressources tirée d'un ensemble G(Si) de signatures Si disponibles, chaque ressource Ri ayant un taux d'occupation n correspondant à un nombre de flux alloués, caractérisée en ce qu'elle comporte au moins les étapes suivantes:
Au niveau d'au moins un noeud:
- calculer, à partir des signatures Si des flux Fi auxquels le noeud est abonné et pour chacun de ces flux Fi, les ressources RBres réservées dans lesquelles il n'y a pas de collision, et les ressources RBcomp potentiellement en compétition dans lesquelles des collisions sont possibles,
- vérifier si la ressource courante RB est réservée ou si elle est en compétition,
- si la ressource courante RBres est réservée,
- si le noeud est la source de transmission de paquet ou si le noeud a déjà décodé correctement le paquet, transmettre le paquet du flux associé à la ressource,
- sinon essayer de décoder le paquet du flux et si le décodage est correct, mémoriser le paquet décodé en mémoire,
- si la ressource courante RBcomp est en compétition, appliquer une méthode de gestion des collisions des flux sur les ressources où n>1.

Le réseau de communication sans fil est, par exemple, un réseau ad hoc multi-sauts qui utilise une technique de relayage coopératif ou de broadcast coopératif.

On peut utiliser comme ressources RBi des créneaux temporels à accès multiple à répartition dans le temps sur un ou plusieurs canaux fréquentiels.

Il est possible d'utiliser comme ressources des créneaux temporels à accès multiple à répartition dans le temps sur une ou plusieurs sous-bandes fréquentielles, tels que des systèmes OFDMA ou des systèmes OFDMA précodés.

On peut utiliser comme ressources RBi des créneaux temporels à accès multiple à répartition dans le temps sur un ou plusieurs codes, et/ou sur une ou plusieurs couches et/ou faisceaux spatiaux.

L'ensemble de signatures disponibles peut être préconfiguré dans tous les noeuds ou être déterminé dynamiquement par les noeuds ou encore évoluer dans le temps ou en fréquence selon une séquence pseudo-aléatoire connue par tous les noeuds.

L'attribution d'une signature à un flux peut être prédéterminée en utilisant une séquence pseudo-aléatoire calculée à partir de paramètres communs.

La méthode de gestion des collisions est une méthode d'évitement de collision comportant au moins les étapes suivantes :
- vérifier dans la mémoire d'un noeud les paquets des flux en compétition qui ont déjà été décodés correctement, les combinaisons de paquets des flux en compétition qui ont déjà été décodés correctement par le noeud,
- essayer de former la combinaison de paquets qui correspond aux flux en compétition sur la ressource courante RBcomp à partir de paquets ou de combinaisons de paquets présents en mémoire et décodés correctement par le noeud,
- si la combinaison est formée, transmettre la combinaison de paquets qui correspond aux flux en compétition sur la ressource courante RBcomp,
- sinon écouter pour décoder une combinaison de paquets qui correspond aux flux en compétition sur la ressource courante RBcomp, la combinaison étant transmise éventuellement par d'autres noeuds du réseau et si le décodage est correct, mémoriser cette combinaison de paquets décodés en mémoire,

La combinaison des paquets des flux peut être effectuée par l'application ou exclusif « XOR » bit à bit sur les paquets décodés par le noeud.

La combinaison des paquets des flux est, par exemple, effectuée par l'application d'une technique de codage réseau au niveau de la couche physique qui combine les signaux en bande de base correspondant aux paquets en question

La méthode de gestion des collisions utilisée peut être une méthode de suppression d'interférence comportant au moins les étapes suivantes
- vérifier dans la mémoire d'un noeud quels sont les paquets des flux en compétition qui ont déjà été décodés correctement,
- appliquer une fonction de décision entre écouter ou transmettre des flux en fonction du nombre des paquets des flux en compétition déjà décodés et présents en mémoire et de la politique de transmission,
- lorsque le noeud écoute, mémoriser les paquets envoyés sur la ressource en compétition RBcomp par les autres noeuds et décodés par le noeud, et appliquer au niveau de la couche physique une technique de réception multi-utilisateur par annulation d'interférences.
- lorsque le noeud transmet, transmettre le paquet du flux mémorisé en fonction de politique de transmission du flux.

Le choix au niveau d'un noeud entre écouter et transmettre est, par exemple, réalisé en fonction d'au moins une des informations suivantes :
- de la priorité des flux de données,
- de la consommation d'énergie du noeud,
- du niveau de batterie du noeud,
- d'une probabilité de transmission appliquée pour réduire la probabilité de collision,
- de la nature et de la fonction du noeud.

Le choix du flux à transmettre pour un noeud peut être réalisé en fonction des informations de qualité de service associées au flux, de son taux d'activité couplée à une information de voisinage/densité.

Le paquet transmis peut résulter d'une combinaison des paquets décodés présents en mémoire.

Chaque noeud émetteur émet, par exemple, avec une politique d'émission, de contrôle de puissance et d'adaptation des caractéristiques du signal émis choisie en fonction de la qualité de synchronisation temps/fréquence, du type de noeud et du niveau de sa batterie.

L'invention concerne aussi un système pour la transmission de paquets dans un réseau de communication sans fil, ledit réseau de communication comprenant plusieurs noeuds abonnés à un ou plusieurs flux Fi et partageant une ou plusieurs ressources RBi pour la transmission de ces flux avec des possibilités de collision, un ou plusieurs noeuds jouant un rôle de source d'émission de paquets d'un ou plusieurs flux différents, chaque flux Fi ayant une signature Si d'allocation de ressources tirée d'un ensemble G(Si) de signatures Si disponibles, chaque ressource Ri ayant un taux d'occupation n correspondant à un nombre de flux alloués, caractérisé en ce que chacun des noeuds N₁,...N₆, comprend un émetteur/récepteur, en liaison avec un processeur configuré pour exécuter les étapes du procédé selon l'invention, une base de données pour le stockage des signatures

D'autres caractéristiques et avantages de la présente invention apparaîtront mieux à la lecture de la description d'exemples de réalisation donnés à titre illustratif et nullement limitatifs annexée des figures qui représentent :
[Fig.1], illustre l'allocation de signatures dans un bloc ressources,
[Fig.2], illustre un exemple de modèle de réseau,
[Fig.3], un exemple de gestion de la collision dans un réseau de communication comprenant plusieurs noeuds communiquant par broadcast,
[Fig.4], les étapes du procédé selon une première variante de réalisation,
[Fig.5], les étapes du procédé selon une deuxième variante de réalisation.

Dans l'art antérieur, il est connu d'associer des ressources orthogonales à chaque flux multicast. La signature d'allocation d'un flux est le vecteur qui indique les ressources allouées aux flux parmi celles disponibles dans le système. Ce vecteur peut prendre la forme d'un bitmap sur une séquence de longueur égale au nombre de RB disponibles (0 = RB non alloué, >0 = RB alloué), ou un vecteur de taille variable qui contient les indices des unités de ressources d'allocations RB alloués, ou tout autre forme d'encodage de cette information.

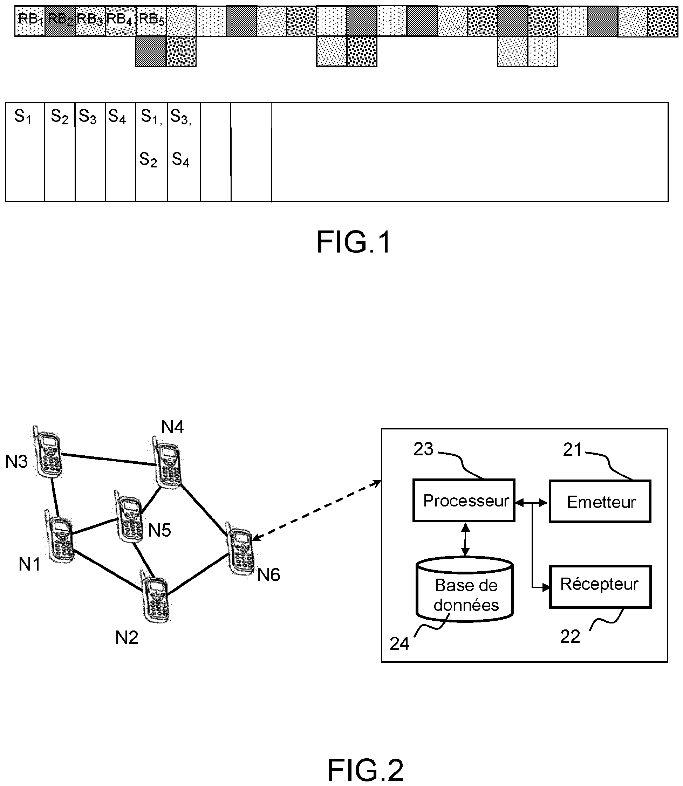

Avec des familles de signatures d'allocation bien construites, il est possible de maîtriser les collisions et de régler différentes performances. La figure 1, qui indique en correspondance d'un bloc ressources RBi l'identifiant des signatures Si auxquelles le RBi est alloué, illustre un exemple où chaque signature d'allocation a une et une seule collision avec n'importe quelle autre signature, la signature S₁ est en collision avec la signature S₂ sur le bloc ressources RB₅. Ceci permet de diminuer le nombre de RB nécessaires à la transmission des flux ou paquets de données par rapport au cas d'allocation orthogonale, c'est-à-dire des signatures qui n'ont aucun bloc ressources RB en commun, tout en limitant la dégradation de la qualité de service induite.

Dans le procédé selon l'invention, on suppose que les noeuds du réseau utilisent une technique de relayage basée sur le broadcast coopératif connu de l'art antérieur cité ci-dessus. Il est possible de définir une politique de transmission appliquée au relayage coopératif adopté par les noeuds. La politique est fixée au niveau du groupe des abonnés d'un flux, voire même du noeud, en fonction d'une ou plusieurs des métriques ou paramètres suivants : les paramètres de configuration réseau et/ou groupe et/ou noeud, des mesures d'interférences/ de topologie/ de taux d'activité dans les noeuds et/ou dans les groupes et/ou dans les flux, des mesures de paramètres du noeud (par exemple la consommation d'énergie), des rôles que les noeuds peuvent avoir dans un réseau (passerelle ou « gateway », chef de cluster) ou dans une structure opérationnelle (chef de groupe, hub, etc.), du type d'équipement (véhiculaire, portatifs, station fixe, etc.). Aux flux multicast sont associés des descripteurs de qualité de service qui définissent les contraintes de distribution et les performances ciblées des flux. On suppose que les flux ont de fortes contraintes de latence et le système doit mettre en oeuvre une gestion de ressources adaptée. Les ressources pour la diffusion de chaque message d'un flux sont par exemple préréservées ou elles peuvent été déterminées selon un mécanisme connu de l'art antérieur.

Le procédé selon l'invention alloue aux flux, différents motifs ou signatures d'allocation de ressources. L'attribution des signatures aux flux peut être dynamique faite de manière distribuée et autonome, ou de façon distribuée avec concertation entre les différentes entités du réseau. Elle peut être réalisée par un allocateur centralisé ou encore par statique prédéterminée à la configuration par un planificateur de ressources. Chaque mode présente ses avantages en termes de réactivité, de consommation de ressources et d'énergie pour la signalisation et pour trouver la signature. Par exemple, cette attribution des signatures peut être faite en définissant *le taux d'occupation des ressources* (défini sur chaque RB comme le nombre de flux qui sont potentiellement en collision, ce qui est égal au nombre de signatures différentes auxquelles est alloué le RB en question). Pour chacun des blocs ressources RBi, par superposition des signatures d'allocation de tous les flux, il est possible de définir un taux d'occupation n correspondant au nombre de flux différents alloués.

L'attribution des signatures aux flux peut aussi prendre en compte des hypothèses de trafic, de charge, de nombre total de ressources disponibles, de priorité entre flux, d'hypothèses de distribution spatiale des noeuds pendant la durée de vie des flux, etc.

Dans le cas où un même RB est alloué à plusieurs flux (signatures), i.e., le taux d'occupation n est supérieur à un, en ayant ainsi un risque des collisions. Le procédé va décider soit de traiter les collisions (se conduire comme si elles n'existaient pas), soit de mettre en place une procédure d'évitement de collisions détaillée ci-après ou encore de mettre en place une procédure de suppression d'interférences détaillée ci-après. Le choix peut être exécuté par flux ou être commun à plusieurs flux. Le choix de traitement de collisions peut être statique et pris au moment de la configuration, ou peut changer de façon dynamique pendant les communications. Dans ce dernier cas, la décision du type de traitement de l'interférence est prise soit centralement dans une entité du réseau et diffusée aux autres, soit négociée dynamiquement entre les noeuds ou groupes de noeuds abonnés à un flux. Le choix du type de traitement de collision peut dépendre des capacités de traitement des noeuds. Une politique de combinaison des flux sur les ressources où n est supérieur à un peut dépendre de la densité du réseau, de la priorité des flux en concurrence, etc.

La figure 2 illustre un exemple de réseau de communication comprenant plusieurs noeuds utilisant entre eux un protocole de communication connu de l'homme du métier. Le protocole de communication est basé sur une diffusion en broadcast coopératif. Un noeud participant à la communication possède les modules et les éléments nécessaires à son autonomie. Ainsi, un noeud N₁,...N₆, comprend un émetteur/récepteur, 21, 22, lié à un processeur 23 configuré pour exécuter les étapes du procédé de transmission selon l'invention, une base de données ou un espace mémoire 24 pour le stockage, par exemple, des signatures dédiées à chacun des noeuds du réseau ou toute autre façon de stocker les signatures (par exemple, on peut indiquer les identifiants des signatures qui sont générés quand nécessaire).

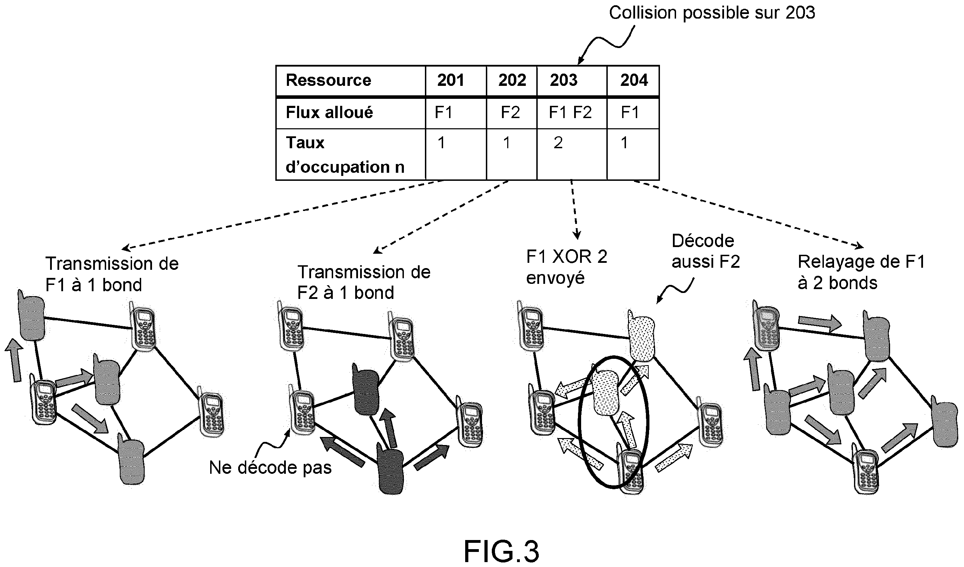

Nous décrivons ici une façon d'éviter les collisions qui consiste à réaliser une gestion particulière des flux. Dans l'exemple de la figure 3, le flux F₁ et le flux F₂ doivent être distribués à tous les noeuds du réseau. Ces derniers ont connaissance de la signature attribuée à chacun des flux. Dans l'exemple, mais sans être limitatif, les signatures sont de longueur 3 et elles sont en collisions sur une ressource. La source du flux F₁ est le noeud N₁. La source du flux F₂ est le noeud N₂. Le flux F₁ et le flux F₂ sont transmis dans un premier temps sans collision, chacun sur un créneau temporel distinct, 201, 202. Supposons que sur le RB 201 les noeuds N₂, N₃ et N₅ décodent correctement le paquet du flux F₁ dont les bits sont *a*₁, *a*₂, ..., *a_{K}.* Supposons que sur le RB 202 les noeuds N₅ et N₆ décodent correctement le paquet du flux F₂ dont les bits sont *b*₁, *b*₂, ..., *b_{K}.* Le noeud N₁ n'arrive pas à décoder le paquet du flux F₂ bien qu'en portée parce que, par exemple, le signal a subit un fort évanouissement. Sur le RB 203, il y a collision possible. Ceci est identifié par tous les noeuds du réseau, qui connaissent les signatures du flux F₁ et du flux F₂. Pour éviter la collision, sur le bloc ressources RB 203 chacun des noeuds applique la procédure suivante. Chaque noeud regarde s'il a reçu et décodé correctement les paquets P₁ et P₂ des deux flux F₁ et F₂ envoyés dans les sessions de relayage courantes. Si oui, le noeud forme un troisième paquet P₃ en exécutant, par exemple, une opération XOR sur les bits des paquets d'information décodés, *cₖ* = *aₖ*⊕*bₖ*, *k* = 1, ..., *K.* Ce nouveau paquet, associé à un flux F₃ dont les bits sont *c*₁, *c*₂, ..., *c_{K}*, est envoyé sur le bloc ressources RB 203. Seuls les noeuds N₂ et N₅ sont en mesure d'envoyer le paquet du flux F₃ dans le RB 203. Supposons, que les noeuds N₁ et N₄ décodent correctement le paquet du flux F₃. Immédiatement, les noeuds cherchent à combiner le paquet qu'ils viennent de décoder avec les paquets des autres flux qui sont dans leur mémoire, s'ils n'ont pas déjà décodé les paquets des deux flux. En particulier, le noeud N₁ possède déjà le paquet du flux F₁ dans sa mémoire. Il peut donc dériver le paquet du flux F₂ en combinant avec un XOR les bits des paquets des flux F₁ et F₃ : *bₖ* = *aₖ* ⊕ *cₖ, k* = 1, ..., *K*, il récupère ainsi les paquets des deux flux d'intérêt. Le noeud N₄, en revanche, n'a dans sa mémoire ni le paquet du flux F₁ ni celui du flux F₂. Il ne peut donc pas pour l'instant dériver ces paquets, mais il garde en mémoire le paquet du flux F₃. Dans le RB 204, seuls les noeuds ayant correctement décodé le paquet du flux F₁, c'est-à-dire les noeuds N₁, N₂, N₃, N₅, peuvent le transmettre selon le protocole de broadcast coopératif. Supposons que les noeuds restants (N₄, N₆) décodent correctement le paquet. Le noeud N₄ regarde immédiatement dans sa mémoire, il voit que le paquet du flux F₃ y est présent et en le combinant avec celui du flux F1, est en mesure de calculer le paquet du flux F₂ : *bₖ* = *aₖ* ⊕ *cₖ, k* = 1, ..., *K.* Le noeud N₆ sauvegarde le paquet du flux F₁ dans sa mémoire avec celui du flux F₂, dans l'éventualité d'autres créneaux en collision. Dans le RB 205, seuls les noeuds ayant correctement décodé le paquet du flux F₂, c'est-à-dire les noeuds N₁, N₂, N₄, N₅, N₆ peuvent le transmettre selon le protocole de broadcast coopératif. Le noeud N₃ pourra donc décoder aussi le paquet du flux F₂. .

En général, selon un premier mode de réalisation, dans le cas de collisions entre transmissions d'utilisateurs d'un même groupe multicast sur des ressources mises en commun, les collisions entre paquets seront évitées en exécutant les étapes décrites ci-après. On suppose que la taille des paquets des flux Fᵢ transmis par les utilisateurs est la même. C'est le cas, par exemple, pour des services de diffusion de la voix, des alarmes, de la signalisation. Dans les blocs de ressources en collision, seule est autorisée la transmission des noeuds qui ont déjà décodé correctement la totalité des paquets Pi des flux Fi potentiellement en collision sur le RB ou des noeuds qui sont capables de former le paquet combiné à partir des paquets ou des combinaisons de paquets précédemment décodés correctement. Le paquet transmis sera une combinaison des paquets déjà décodés, par exemple selon la méthode du « network coding », autrement dit, un noeud va générer un nouveau paquet par une opération de « ou exclusif » XOR. Pour émettre sur une ressource RB qui a un taux d'occupation n, par exemple, le noeud doit avoir correctement décodé les n flux diffusés au cours de cette session de relayage qui sont alloués à ce RB. L'opération XOR peut être remplacée par toute opération linéaire ou non linéaire permettant la combinaison des flux pour générer un flux transmissible sur un bloc de ressource. Cette opération est identique dans tous les noeuds qui sont en mesure d'exécuter l'opération XOR. En opérant ainsi, un seul paquet et un seul signal identique émis sont envoyés par tous les noeuds sur la ressource en compétition et il n'y a plus de collision.

Dans une autre mise en oeuvre, le système procède comme précédemment mais, au lieu d'utiliser une technique de « network coding », il utilise une technique qui met en oeuvre au niveau de la couche PHY un codage conjoint de l'information des deux (ou plusieurs) paquets, connue sous l'abréviation anglo-saxonne « Physical Layer Network Coding).

Il est possible d'ajouter des variantes à cette stratégie d'évitement de collision. Si la probabilité de collision est faible, les ressources dédiées à la transmission des paquets avec XOR ne seront pas utilisées et seront probablement gaspillées. Ainsi, cette méthode d'évitement de collision est à utiliser, par exemple, dans le cas de trafic et de topologie dense. Selon une variante de réalisation, si le système se rend compte de façon dynamique que certaines ressources sont souvent en collision, il peut activer la modalité « network coding » par exemple quand le taux de collision dépasse un certain seuil Vs, uniquement sur ces ressources.

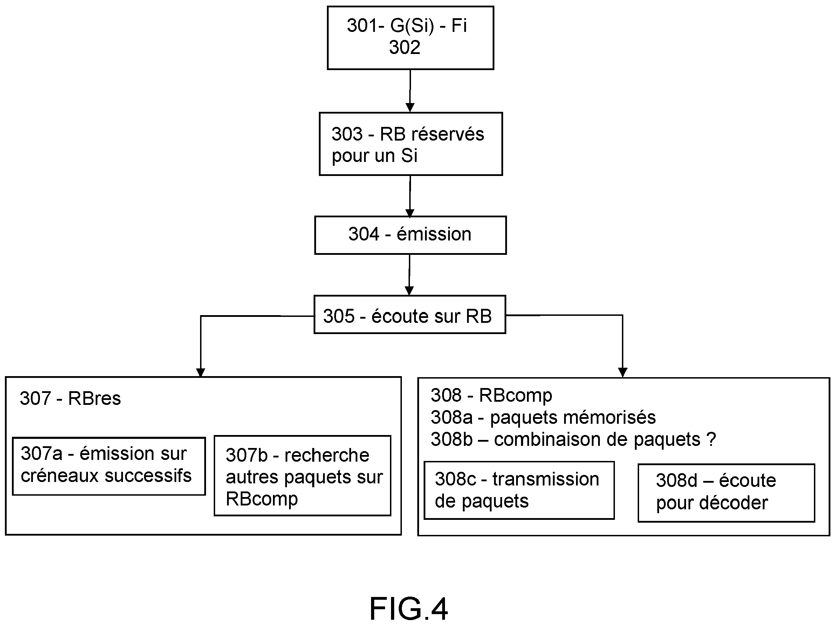

La figure 4 illustre un exemple de succession d'étapes selon une première variante de réalisation.

Dans un réseau, un ensemble G(Si) de signatures Si est associé de façon bijective aux flux à diffuser. Cet ensemble G(Si) de signatures Si est connu par tous les noeuds du réseau et pour chaque session de relayage. G(Si) peut être préconfiguré ou évoluer dynamiquement par exemple selon une séquence pseudo-aléatoire connue par tous les noeuds. Il peut aussi être déterminé dynamiquement par les noeuds.

Le procédé comporte alors les étapes suivantes :
301 - A l'intérieur d'un ensemble de signatures G(Si), une signature est attribuée à chaque flux Fi. Cette attribution de signature à un flux se fait soit de façon prédéterminée statique, soit selon une fonction pseudo-aléatoire, soit en fonction de paramètres communs, soit par une procédure d'allocation centralisée ou distribuée. Le but est que tous les utilisateurs inscrits à ce flux connaissent la signature associée ;
302 - La signature Si peut être changée dynamiquement sur des sessions de relayages successives en fonction d'une séquence pseudo-aléatoire qui sera par exemple calculée à partir de paramètres communs, comme le numéro de créneau de la trame ou le numéro de la session de relayage, etc. Les sessions de relayage peuvent être à l'intérieur d'une trame ou s'étendre sur plusieurs trames. Par exemple, dans les systèmes TDMA synchrones organisés par trame, le système tous les noeuds peuvent connaître le numéro de trame courant. Ce numéro peut être utilisé comme entrée pour choisir la signature courante pendant la session de relayage qui commence dans cette trame. On suppose que tous les noeuds sont capables de calculer la même séquence ;
303 - A chaque session de relayage, pour les flux Fi auxquels sont inscrits les noeuds, tous les noeuds calculent, à partir des signatures Si correspondantes, les blocs ressources RB réservés, associés à chaque signature, dans lesquels il n'y a pas de collision et les RB en compétition où il y a collision possible ainsi que les signatures entre lesquelles il y a compétition ;
304 - Chaque noeud source émet les paquets Pi du flux Fi dont il est le générateur d'information, seulement dans les RB réservés à sa signature avec une politique de transmission et de contrôle de puissance donnée ;
305 - Les noeuds récepteurs/relais potentiels écoutent les ressources RB associées aux signatures des flux auxquels ils sont inscrits, que les signatures soient en compétition ou pas. La source d'un flux associé à une signature se comporte comme un récepteur/relais pour les autres flux auxquels la source est inscrite,
Tous les noeuds qui écoutent en un RB essayent de décoder les paquets reçus de flux potentiellement présents, et :
   307 - Si les noeuds parviennent à décoder le paquet d'un flux de données spécifique dans un RB réservé, RBres,
   307a - Chaque noeud déduit le paquet du flux, le sauvegarde en mémoire et passe en mode émission (source ou relais actif) dans les créneaux successifs réservés à la signature du flux correspondante. Le noeud émet le message correspondant en utilisant la politique de transmission en vigueur,
   307b - Le noeud utilise le paquet décodé du flux courant pour vérifier si, en le combinant avec les paquets décodés correctement des autres flux que le noeud a éventuellement en mémoire, il arrive à déduire les paquets d'autres flux (signatures) ou d'autres combinaisons. S'il arrive à déduire les paquets d'autres flux, le noeud passe en émission dans les RB réservés à ces flux-là (flux obtenus par combinaison de paquets). S'il arrive à générer des combinaisons de paquets, il passe en émission dans les RB en collision dont les signatures en collision représentent la combinaison de paquets générée,
308 - Si les noeuds arrivent à décoder un paquet de données sur un RB en compétition :
   Un noeud vérifie dans la mémoire d'un noeud les paquets des flux en compétition qui ont déjà été décodés correctement 308a, les combinaisons de paquets des flux en compétition qui ont déjà été décodés correctement par le noeud,
   308b - essayer de former la combinaison de paquets qui correspond aux flux en compétition sur la ressource courante RBcomp à partir de paquets ou de combinaisons de paquets présents en mémoire et décodés correctement par le noeud,
   Si la combinaison est formée, transmettre la combinaison de paquets qui correspond aux flux en compétition sur la ressource courante RBcomp, 308c,
   308d - Sinon le noeud écoute pour décoder une combinaison de paquets qui correspond aux flux en compétition sur la ressource courante RBcomp, la combinaison étant transmise éventuellement par d'autres noeuds du réseau et si le décodage est correct, mémoriser cette combinaison de paquets décodés en mémoire.

Le nombre d'émissions, la puissance d'émission et en général les caractéristiques du signal émis (débit, robustesse, etc.) peuvent varier selon différentes stratégies qui peuvent être déterminées selon des paramètres (de qualité de lien, d'état du dispositif, qualité de synchronisation temps/fréquence, de type de noeuds, de configuration réseau ou utilisateur, informations opérationnelles/hiérarchiques, priorité, de qualité de service des flux, des taux d'occupation des ressources ou des noeuds, etc.) connus ou estimés par les noeuds ou distribués par un allocateur.

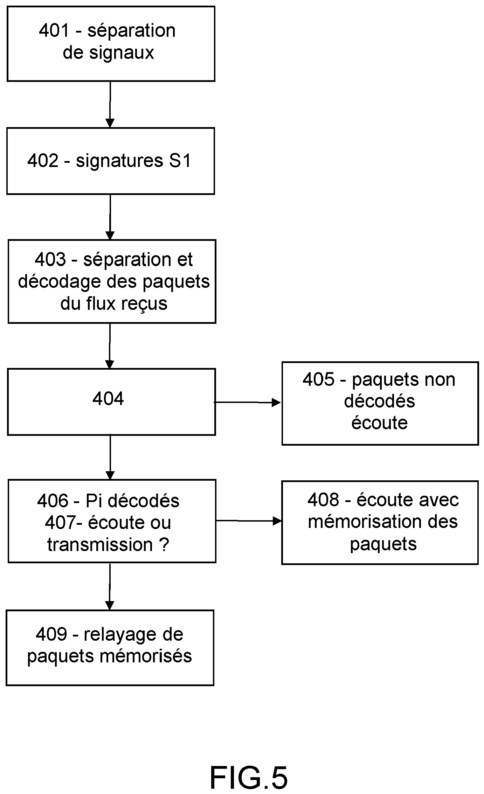

La figure 5 illustre un exemple d'étapes mises en oeuvre par une autre variante de réalisation. Lorsque les noeuds émettent des paquets différents en collision sur la même ressource, le procédé va essayer de résoudre ces collisions, en traitant l'interférence générée par l'émission de signaux (correspondants aux paquets) différents. Cette situation peut se produire soit pour des utilisateurs dans un même groupe, soit dans des groupes différents. Le cadre est toujours la transmission en broadcast coopératif.

En présence de plusieurs signaux différents (collisions), le récepteur d'un noeud identifie la présence de un ou de plusieurs paquets appartenant à des flux transmis en broadcast coopératif sur les ressources, 401.
- 402, Soit cette information est disponible au noeud, il a donc connaissance de l'ensemble des signatures utilisées sur chaque RB et dans son rayon de réception,
- 403, Soit cette information n'est pas du tout disponible ou est partiellement disponible au noeud, par exemple parce que le système n'est pas doté de moyen pour coordonner ou pour distribuer parfaitement cette information entre les noeuds qui participent aux sessions de relayage. Dans ce cas, le noeud doit quand même essayer d'identifier (en totalité ou en partie) combien et quels flux sont transmis sur le RB en cours pour pouvoir tenter de les décoder. Cela peut se faire, par exemple, en les distinguant à travers des séquences pilotes ou des préambules ou toute autre méthode au niveau de la couche physique aidée ou pas par des connaissances de paramétrage réseau (voisins, nombre, type et identifiant des séquences possibles, etc.) ou par des informations en provenance des couches hautes qui aident à restreindre le nombre de choix possibles.

Le récepteur du noeud sépare et décode (ou tente de le faire) un ou plusieurs paquets en parallèle en les extrayant du signal reçu. Plusieurs stratégies de détection/décodage peuvent être adoptées, soit de type effacement d'interférence en série - SIC (Serial Interférence Cancellation) ou de type effacement d'interférence en parallèle - PIC (Parallel Interférence Cancellation) ou hybride comme dans le « power-based NOMA », soit de type détection conjointe (type SCMA, une technique de type « code-based NOMA »).

Comme dans la réalisation avec évitement d'interférence, lorsqu'un noeud récepteur décode un paquet, il devient relais de ce paquet sur les créneaux (RB) réservés correspondants (associés à la signature correspondante) selon la politique de transmission active.

404 - Sur un RB en compétition dont le taux d'occupation est supérieur à un, le noeud relais calcule quels sont les flux qui sont en compétition sur le RB courant grâce à la connaissance qu'il a des signatures auxquelles le RB a été alloué. Puis il va décider s'il va écouter ou transmettre, en fonction des paquets (associés aux flux en compétition sur le RB) qu'il a déjà réussi à décoder dans la session de relayage en cours :
405 - Si le noeud n'a pas encore décodé de paquets correspondants aux flux en compétition dans le RB courant de la session en cours, il décide d'écouter,
406 - Si le noeud a décodé correctement tout ou une partie des paquets des flux en compétition dans le RB courant de la session en cours, le noeud applique une fonction de décision (transmettre ou écouter), 407, qui peut dépendre de la politique de transmission de la stratégie de relayage.

Si le noeud décide d'écouter, alors il applique les traitements décrits précédemment, potentiellement en exploitant l'information en provenance des paquets (des flux en compétition dans le RB courant de la session de relayage) déjà décodés, il va mémoriser les paquets envoyés sur la ressource en compétition par les autres noeuds et qu'il a décodés, 408,

Si un noeud décide de transmettre sur un RB en compétition, il doit choisir à quel flux appartient le paquet qu'il va envoyer, parmi ceux qu'il a décodés correctement et transmettre le paquet en fonction de la politique de transmission du flux, 409.

La politique de transmission peut tenir compte :
De la priorité des transmissions (celles qui sont encore à recevoir par rapport à celles déjà reçues, par exemple s'il y a une alarme prioritaire déjà décodée on décide de l'émettre ou, au contraire, si la ressource partagée est dédiée à la transmission d'alarme ou signalisation critique, on décide de rester en écoute). Cela inclut la priorité attachée à un service, ou la priorité d'un groupe, dans le cas de RB partagé par des groupes différents,
D'une probabilité de transmission appliquée pour réduire la probabilité de collision,

Du type et de la fonction du noeud, par exemple une source transmet toujours son paquet, même sur un RB en compétition, ou une passerelle/ un chef de cluster va toujours transmettre,

De la consommation d'énergie du noeud, de son niveau de batterie.

La fonction de décision peut être de type pseudo-aléatoire. Ceci peut être réalisé par exemple en tirant au hasard quel flux envoyer selon une certaine distribution, dans le but de garantir un niveau de qualité de service donné sur la diffusion de la totalité du flux, lorsque la diffusion du flux s'étale sur plusieurs sessions de relayage. La fonction de décision peut prendre en compte des critères de type déterministe, la valeur de paramètres/configurations du noeud ou réseau, etc. La fonction de décision du flux (et donc de son paquet dans la session de relayage en cours) à envoyer utilise l'une ou plusieurs des informations suivantes :
Une information de localisation : le noeud peut décider de relayer le paquet d'un certain flux plutôt qu'un autre flux en fonction de la zone du réseau où il se trouve, pour regrouper les émetteurs du paquet en question et limiter donc la zone d'interférence, et diminuer ainsi la probabilité de collision.
Une information de voisinage/densité : dans le cas de plusieurs groupes, des informations de voisinage couplées à l'appartenance à un groupe peuvent aider un noeud à décider quel paquet envoyer : par exemple si le noeud se rend compte que la densité des noeuds d'un certain groupe est faible en cette zone, il peut décider de transmettre en priorité le paquet du flux de ce groupe pour garantir un meilleur taux de distribution du paquet,
Une information de priorité entre les flux,
Le taux d'activité des groupes/flux/noeuds : le noeud décide d'émettre un paquet d'un certain flux en fonction d'une probabilité liée aux taux d'activité du flux (nombre de paquets écoulés dans un certain temps) ou du taux d'activité des groupes ou noeuds qui sont intéressé à ce flux, si disponible,
Des informations de qualité de service associées aux flux. Par exemple un descripteur de qualité de service pour un certain flux peut contenir des critères de robustesse, de nombre de bonds à couvrir, etc., couplés éventuellement avec les politiques de transmission actives associés à chaque groupe / utilisateur.

Quelques exemples chiffrés sont donnés ci-après pour illustrer l'invention.

Imaginons qu'il y ait un nombre total de RB Ntot = 24. Supposons qu'il y ait Ne = 4 flux en parallèle et que l'on souhaite que chaque flux utilise Nv = 6 RBs. La façon classique est d'allouer des signatures orthogonales à chaque flux, par exemple le premier flux aura une signature du type (les chiffres correspondent à l'identifiant de la signature aux quel le RB est alloué (0 indique que le RB n'est pas alloué à la signature), l'index du RB est donc l'index des chiffres dans la séquence) :
1 0 0 0 1 0 0 0 1 0 0 0 1 0 0 0 1 0 0 0 1 0 0 0

Le deuxième une signature du type :
0 2 0 0 0 2 0 0 0 2 0 0 0 2 0 0 0 2 0 0 0 2 0 0
et ainsi de suite.

À la fin les Ntot ressources seront allouées aux flux de la façon suivante :
1 2 3 4 1 2 3 4 1 2 3 4 1 2 3 4 1 2 3 4 1 2 3 4
où le numéro est l'identifiant du flux et le vecteur représente les RBs de l'ensemble de ressources.

Dans ce cas, il n'y a pas de collision, les ressources sont orthogonales, la latence est la même (6 cycles de 4 ressources) pour écouler les ressources pour tous les flux. La robustesse est la même (6 RBs par flux).

La solution consiste dans le fait de permettre des collisions et de maîtriser le sous-ensemble de RBs sur lequel il y a possibilité de collisions en utilisant des signatures prédéfinies ou tirées aléatoirement dans un ensemble de signatures prédéfinies. Comme décrit précédemment, il y a des RBs réservés (sans collisions) à certain flux et des RBs en compétition entre plusieurs flux (collisions possibles).

L'avantage est que la latence peut être diminuée, ou le nombre d'occasions de transmissions pour un flux donné peut être augmenté, tout en garantissant un niveau de performance minimal grâce aux RB réservés.

Le compromis entre latence, robustesse, débit total/efficacité spectrale totale (et efficacité énergétique) est réglé à travers le choix des signatures.

Dans la suite de cet exemple spécifique, par simplicité, on suppose que les noeuds du réseau utilisent des récepteurs non avancés et qu'en cas de collision les paquets sont perdus. De plus, toujours par simplicité dans cet exemple spécifique, on suppose que chaque flux est adressé à un groupe d'utilisateurs disjoints, et que les noeuds d'un groupe n'écoutent pas dans les ressources qui ne sont pas allouées à la signature de leur flux.

### Exemple 1

Ntot = 22 RBs (diminution des ressources utilisées), Ne = 4 flux, Nv = 7 RBs. Les signatures ont des collisions partielles. Par exemple, pour le premier flux F₁ on peut avoir :
1 0 0 0 1 0 1 0 0 0 1 0 1 0 0 0 0 1 1 0 0 0

Pour le deuxième flux F₂ :
0 2 0 0 2 0 0 2 0 0 0 2 0 2 0 0 2 0 0 2 0 0

Et ainsi de suite.

Les allocations finales seront comme ci-dessous (double numéro indique collision possible) :
1 2 3 4 1 3 1 2 3 4 1 2 1 2 3 4 2 4 1 2 3 4
24 34 31

Ce schéma a les caractéristiques suivantes par rapport au cas classique sans collisions :
Un flux actif: latence améliorée sur six ressources RB ou alors même latence mais plus de robustesse (7 RB au lieu de 6)
Deux flux actifs: puisque les signatures garantissent qu'il y a une seule collision entre deux flux quelconques, on aura six RBs sans collision, en garantissant la même robustesse avec une latence parfois légèrement meilleure que celle du système orthogonal.
Trois flux actifs: robustesse diminuée (5 RB / 6) mais encore plus de flux actifs
Quatre flux actifs: robustesse encore diminuée (4 RB / 6) mais encore plus de flux actifs
On voit bien comment cette méthode permet de multiplexer plusieurs flux sur moins de ressources.

### Exemple 2

Ntot = 24 RBs (diminution des ressources utilisées), Ne = 4 flux, Nv = 8 RBs.

D'autres signatures d'allocation de ressources donnent la distribution suivante :
1 2 3 4 1 1 2 3 4 2 1 2 3 4 3 1 2 3 4 4 1 2 3 4
2 3 4 1
3 4 1 2

Un flux actif : latence améliorée, 16 RBs ou moins avec 6 RBs ou alors même latence du cas orthogonal avec une meilleure robustesse (8 RB / 6).
Deux flux actifs: même latence et robustesse (on a deux collisions possible sur 8 entre chaque couple de flux)
Trois flux actifs: robustesse diminuée (5 RB / 6) mais meilleure que le premier exemple.

Quatre flux actifs: robustesse diminuée (5 RB / 6), même robustesse que le premier exemple.

### Exemple 3

Ntot = 24 RBs (diminution des ressources utilisées), Ne = 4 flux, Nv = 10 RBs.
1 2 3 4 1 1 2 3 4 2 1 2 3 4 3 1 2 3 4 4 1 2 3 4
2 3 4 12341
3 4 1 23412

Un flux actif: latence améliorée (10 RBs) sur 6 RBs utilisés, ou alors robustesse améliorée (10 RB / 6).
Deux flux actifs: même latence avec robustesse améliorée (7 RB / 6)
Trois flux actifs: robustesse diminuée (4 RB / 6) comme le cas 4 flux de l'exemple 1.

Quatre flux actifs: robustesse diminuée (4 RB / 6) comme le cas 4 flux de l'exemple 1.

### Exemple 4

Ntot = 24 RBs (diminution des ressources utilisées), Ne = 4 flux, Nv = 9 RBs.
1 2 3 4 1 1 2 3 1 2 3 4 1 1 2 2 1 2 3 4 1 1 2 3
2344 3434 2334
Un flux actif: latence améliorée 16 RBs avec 6 RBs reçus, ou robustesse améliorée (9 RB / 6)
Deux flux actifs: même latence et robustesse améliorée (7 RB/8)
Trois flux actifs: robustesse diminuée (5 RB / 6)

Quatre flux actifs: robustesse diminuée (3 RB / 6), ici on a une protection avec plus de différence en fonction du nombre d'utilisateurs actifs.

Le procédé selon l'invention admet un accès en compétition sur les ressources pour le relayage en broadcast coopératif qui permet de réduire le gaspillage de ressources lorsqu'elles ne sont pas utilisées, les flux présents pouvant obtenir de meilleures performances.

En maîtrisant les signatures des allocations, il est possible de maîtriser les collisions et d'utiliser la robustesse des transmissions coopératives pour la propagation des flux. Ainsi, un gain de débit total (et/ou de latence, et/ou de nombre de flux en parallèle) est réalisé. De plus, les collisions éventuellement générées peuvent être rédhibitoires dans certaines configurations. Elles sont donc gérées par des techniques avancées de couche PHY/MAC qui permettent soit d'éviter les collisions, soit de minimiser leur impact. Davantage de gains en termes de latence et de multiplexage de flux sur les mêmes ressources sont obtenus.

## Revendications

1. Procédé de transmission de paquets de flux de données au sein d'un réseau de communication sans fil, ledit réseau de communication sans fil comprenant plusieurs noeuds abonnés à un ou plusieurs flux Fi et partageant une ou plusieurs ressources RBi pour la transmission de ces flux avec des possibilités de collision, un ou plusieurs noeuds jouant un rôle de source d'émission de paquets d'un ou plusieurs flux différents, chaque flux Fi ayant une signature Si d'allocation de ressources tirée d'un ensemble G(Si) de signatures Si disponibles, chaque ressource Ri ayant un taux d'occupation n correspondant à un nombre de flux alloués, **caractérisé en ce qu'**il comporte au moins les étapes suivantes:
Au niveau d'au moins un noeud:
- Calculer, à partir des signatures Si des flux Fi auxquels le noeud est abonné et pour chacun de ces flux Fi, les ressources RBres réservées dans lesquelles il n'y a pas de collision et les ressources RBcomp potentiellement en compétition dans lesquelles des collisions sont possibles,
- Vérifier si la ressource courante RB est réservée ou si elle est en compétition,
- Si la ressource courante RBres est réservée (307),
- Si le noeud est la source de transmission de paquet ou si le noeud a déjà décodé correctement le paquet, transmettre le paquet du flux associé à la ressource, (307a)
- Sinon essayer de décoder le paquet du flux et si le décodage est correct, mémoriser le paquet décodé en mémoire,
- Si la ressource courante RBcomp est en compétition, appliquer une méthode de gestion des collisions des flux sur les ressources où le taux d'occupation n est supérieur à un, (308).

2. Procédé selon la revendication 1 **caractérisé en ce que** le réseau de communication sans fil est un réseau ad hoc multi-sauts qui utilise une technique de relayage coopératif ou de broadcast coopératif.

3. Procédé selon l'une des revendications 1 ou 2 **caractérisé en ce que** l'on utilise comme ressources RBi des créneaux temporels à accès multiple à répartition dans le temps sur un ou plusieurs canaux fréquentiels.

4. Procédé selon l'une des revendications 1 ou 2 **caractérisé en ce que** l'on utilise comme ressources des créneaux temporels à accès multiple à répartition dans le temps sur une ou plusieurs sous-bandes fréquentielles, tels que des systèmes OFDMA ou des systèmes OFDMA précodés.

5. Procédé selon l'une des revendications 1 ou 2 **caractérisé en ce que** l'on utilise comme ressources RBi des créneaux temporels à accès multiple à répartition dans le temps sur un ou plusieurs codes, et/ou sur une ou plusieurs couches et/ou faisceaux spatiaux.

6. Procédé selon l'une des revendications 1 à 5 **caractérisé en ce que** l'ensemble de signatures disponibles est préconfiguré dans tous les noeuds.

7. Procédé selon l'une des revendications 1 à 5 **caractérisé en ce que** l'ensemble de signatures disponibles est déterminé dynamiquement par les noeuds

8. Procédé selon la revendication 7 **caractérisé en ce que** l'ensemble de signatures évolue dans le temps ou en fréquence selon une séquence pseudo-aléatoire connue par tous les noeuds.

9. Procédé selon l'une des revendications 1 à 5 **caractérisé en ce que** l'attribution d'une signature à un flux est prédéterminée en utilisant une séquence pseudo-aléatoire calculée à partir de paramètres communs.

10. Procédé selon l'une des revendications de 1 à 9 **caractérisé en ce que** la méthode de gestion des collisions est une méthode d'évitement de collision comportant au moins les étapes suivantes :
- Vérifier dans la mémoire d'un noeud les paquets des flux en compétition qui ont déjà été décodés correctement (308a), les combinaisons de paquets des flux en compétition qui ont déjà été décodés correctement par le noeud,
- Essayer de former la combinaison de paquets qui correspond aux flux en compétition sur la ressource courante RBcomp à partir de paquets ou de combinaisons de paquets présents en mémoire et décodés correctement par le noeud, (308b),
- Si la combinaison est formée, transmettre la combinaison de paquets qui correspond aux flux en compétition sur la ressource courante RBcomp, (308c),
- Sinon écouter pour décoder une combinaison de paquets qui correspond aux flux en compétition sur la ressource courante RBcomp, la combinaison étant transmise éventuellement par d'autres noeuds du réseau et si le décodage est correct, mémoriser cette combinaison de paquets décodés en mémoire, (308d).

11. Procédé selon la revendication 10 **caractérisé en ce que** la combinaison des paquets des flux est effectuée par l'application ou exclusif « XOR » bit à bit sur les paquets décodés par le noeud.

12. Procédé selon la revendication 10 **caractérisé en ce que** la combinaison des paquets des flux est effectuée par l'application d'une technique de codage réseau au niveau de la couche physique qui combine les signaux en bande de base correspondants aux paquets en question.

13. Procédé selon l'un des revendications 1 à 6 **caractérisé en ce que** la méthode de gestion des collisions est une méthode de suppression d'interférence comportant au moins les étapes suivantes :
- Vérifier dans la mémoire d'un noeud quels sont les paquets des flux en compétition qui ont déjà été décodés correctement, (406),
- Appliquer une fonction de décision entre écouter ou transmettre des flux en fonction du nombre des paquets des flux en compétition déjà décodés et présents en mémoire et de la politique de transmission, (407),
- Lorsque le noeud écoute, mémoriser les paquets envoyés sur la ressource en compétition RBcomp par les autres noeuds et décodés par le noeud, (408), et appliquer au niveau de la couche physique une technique de réception multi-utilisateur par annulation d'interférences.
- Lorsque le noeud transmet, transmettre le paquet du flux mémorisé en fonction de politique de transmission du flux (409).

14. Procédé selon la revendication 13 **caractérisé en ce que** le choix au niveau d'un noeud entre écouter et transmettre est réalisé en fonction d'au moins une des informations suivantes :
- de la priorité des flux de données,
- de la consommation d'énergie du noeud,
- du niveau de batterie du noeud,
- d'une probabilité de transmission appliquée pour réduire la probabilité de collision,
- de la nature et de la fonction du noeud.

15. Procédé selon l'une des revendications 13 ou 14 **caractérisé en ce que** la méthode de séparation et détection/décodage de paquets est réalisée selon une méthode de suppression d'interférences en série.

16. Procédé selon l'une des revendications 13 ou 14 **caractérisé en ce que** le choix du flux à transmettre pour un noeud est réalisé en fonction des informations de qualité de service associées au flux, de son taux d'activité couplée à une information de voisinage/densité.

17. Procédé selon l'un des revendications 13 à 15 **caractérisé en ce que** le paquet transmis résulte d'une combinaison des paquets décodés présents en mémoire.

18. Procédé selon l'une des revendication de 7 à 16 **caractérisé en ce que** chaque noeud émetteur émet avec une politique d'émission, de contrôle de puissance et d'adaptation des caractéristiques du signal émis données en fonction de la qualité de synchronisation temps/fréquence, du type de noeud et du niveau de sa batterie.

19. Système pour la transmission de paquets dans un réseau de communication sans fil, ledit réseau de communication comprenant plusieurs noeuds abonnés à un ou plusieurs flux Fi et partageant une ou plusieurs ressources RBi pour la transmission de ces flux avec des possibilités de collision, un ou plusieurs noeuds jouant un rôle de source d'émission de paquets d'un ou plusieurs flux différents, chaque flux Fi ayant une signature Si d'allocation de ressources tirée d'un ensemble G(Si) de signatures Si disponibles, chaque ressource Ri ayant un taux d'occupation n correspondant à un nombre de flux alloués, **caractérisé en ce que** chacun des noeuds N₁,...N₆, comprend un émetteur/récepteur, (21, 22), en liaison avec un processeur (23) configuré pour exécuter les étapes du procédé selon l'une des revendications 1 à 18 et une base de données (24) pour le stockage des signatures.

## Claims

1. A method for transmitting data stream packets within a wireless communication network, said wireless communication network comprising multiple nodes subscribed to one or more streams Fi and sharing one or more resources RBi for transmitting these streams with possibilities of a collision, one or more nodes acting as a packet sending source of one or more different streams, each stream Fi having a resource allocation signature Si drawn from a set G(Si) of available signatures Si, each resource Ri having an occupancy rate n corresponding to a number of allocated streams, **characterised in that** it contains at least the following steps:
at at least one node:
- computing, from the signatures Si of the streams Fi to which the node is subscribed and for each of these streams Fi, the reserved resources RBres in which there is no collision, and the potentially competing resources RBcomp, in which collisions are possible,
- checking whether the current resource RB is reserved or whether it is competing,
- if the current resource RBres is reserved (307),
- if the node is the packet transmission source or if the node has already correctly decoded the packet, transmitting the packet of the stream associated with the resource, (307a),
- if not, attempting to decode the packet of the stream and, if the decoding is correct, storing the decoded packet in the memory,
- if the current resource RBcomp is competing, applying a method for managing stream collisions on the resources where the occupancy rate n is greater than one, (308).

2. The method according to claim 1, **characterised in that** the wireless communication network is a multi-hop ad-hoc network that uses a cooperative relaying or cooperative broadcasting technique.

3. The method according to one of claim 1 or 2, **characterised in that** time division multiple access time slots on one or more frequency channels are used as resources RBi.

4. The method according to one of claim 1 or 2, **characterised in that** time division multiple access time slots on one or more frequency sub-bands, such as OFDMA systems or pre-coded OFDMA systems, are used as resources.

5. The method according to one of claim 1 or 2, **characterised in that** time division multiple access time slots on one or more codes, and/or on one or more layers and/or spatial beams, are used as resources RBi.

6. The method according to one of claims 1 to 5, **characterised in that** the set of available signatures is preconfigured in all of the nodes.

7. The method according to one of claims 1 to 5, **characterised in that** the set of available signatures is determined dynamically by the nodes.

8. The method according to claim 7, **characterised in that** the set of signatures evolves over time or in terms of frequency in accordance with a pseudo-random sequence known to all of the nodes.

9. The method according to one of claims 1 to 5, **characterised in that** the assignment of a signature to a stream is predetermined by using a pseudo-random sequence computed from common parameters.

10. The method according to one of claims 1 to 9, **characterised in that** the collision management method is a collision avoidance method containing at least the following steps:
- checking, in the memory of a node, the packets of competing streams that have already been decoded correctly (308a), the combinations of packets of the competing streams that have already been decoded correctly by the node,
- attempting to form the combination of packets that corresponds to the competing streams on the current resource RBcomp from packets or combinations of packets present in the memory and decoded correctly by the node, (308b),
- if the combination is formed, transmitting the combination of packets that corresponds to the competing streams on the current resource RBcomp, (308c),
- if not, listening to decode a combination of packets that corresponds to the competing streams on the current resource RBcomp, the combination possibly being transmitted by other nodes of the network and, if the decoding is correct, storing this combination of decoded packets in the memory, (308d).

11. The method according to claim 10, **characterised in that** the packets of the streams are combined by applying an exclusive or, "XOR", bit-by-bit to the packets decoded by the node.

12. The method according to claim 10, **characterised in that** the packets of the streams are combined by applying a network coding technique in the physical layer, which combines the baseband signals corresponding to the packets in question.

13. The method according to one of claims 1 to 6, **characterised in that** the collision management method is an interference suppression method containing at least the following steps:
- checking, in the memory of a node, which packets of the competing streams have already been decoded correctly, (406),
- applying a decision function between listening or transmitting streams depending on the number of the packets of the competing streams that have already been decoded and are present in the memory and on the transmission policy, (407),
- when the node is listening, storing the packets sent on the competing resource RBcomp by the other nodes and decoded by the node, (408), and applying an interference cancelation-based multi-user reception technique to the physical layer,
- when the node is transmitting, transmitting the packet of the stored stream depending on the transmission policy of the stream (409).

14. The method according to claim 13, **characterised in that** the choice, at a node, between listening and transmitting is made depending on at least one of the following items of information:
- the priority of the data streams,
- the energy consumption of the node,
- the battery level of the node,
- a transmission probability applied to reduce the probability of a collision,
- the nature and the function of the node.

15. The method according to one of claim 13 or 14, **characterised in that** the packet separation and detection/decoding method is performed in accordance with a series interference suppression method.

16. The method according to one of claim 13 or 14, **characterised in that** the choice of the stream to be transmitted for a node is made depending on quality of service information associated with the stream, its activity rate coupled with a piece of information regarding neighbourhood/density.

17. The method according to one of claims 13 to 15, **characterised in that** the transmitted packet results from a combination of the decoded packets that are present in the memory.

18. The method according to one of claims 7 to 16, **characterised in that** each sender node sends with a sending, power control and sent signal feature adaptation policy that are given depending on the time/frequency synchronisation quality, the type of node and its battery level.

19. A system for transmitting packets in a wireless communication network, said communication network comprising multiple nodes subscribed to one or more streams Fi and sharing one or more resources RBi for transmitting these streams with possibilities of a collision, one or more nodes acting as a packet sending source of one or more different streams, each stream Fi having a resource allocation signature Si drawn from a set G(Si) of available signatures Si, each resource Ri having an occupancy rate n corresponding to a number of allocated streams, **characterised in that** each of the nodes N₁,...N₆ comprises a transceiver (21, 22), linked to a processor (23) configured to execute the steps of the method according to one of claims 1 to 18, and a database (24) for storing the signatures.

## Patentansprüche

1. Verfahren zum Übertragen von Datenstrompaketen innerhalb eines drahtlosen Kommunikationsnetzes, wobei das drahtlose Kommunikationsnetz mehrere Knoten umfasst, die einen oder mehrere Ströme Fi abonniert haben und sich eine oder mehrere Ressourcen RBi für die Übertragung dieser Ströme mit Kollisionsmöglichkeiten teilen, wobei ein oder mehrere Knoten eine Rolle als Paketsendequelle für einen oder mehrere verschiedene Ströme spielen, wobei jeder Strom Fi eine Ressourcenzuweisungssignatur Si aufweist, die einem Satz G(Si) von verfügbaren Signaturen Si entnommen ist, wobei jede Ressource Ri eine Auslastungsrate n entsprechend einer Anzahl von zugewiesenen Strömen aufweist, **dadurch gekennzeichnet, dass** es mindestens die folgenden Schritte aufweist:
an mindestens einem Knoten:
- Berechnen, aus den Signaturen Si der Ströme Fi, die der Knoten abonniert hat, und für jeden dieser Ströme Fi, der reservierten Ressourcen RBres, in denen es keine Kollisionen gibt, und der potenziell konkurrierenden Ressourcen RBcomp, in denen Kollisionen möglich sind,
- Überprüfen, ob die aktuelle Ressource RB reserviert ist oder ob sie konkurriert,
- wenn die aktuelle Ressource RBres reserviert ist (307),
- wenn der Knoten die Paketübertragungsquelle ist oder wenn der Knoten das Paket bereits korrekt decodiert hat, Übertragen des Pakets des der Ressource zugeordneten Stroms, (307a),
- wenn nicht, Versuchen, das Paket des Stroms zu decodieren, und wenn die Decodierung korrekt ist, Speichern des decodierten Pakets im Speicher,
- wenn die aktuelle Ressource RBcomp konkurriert, Anwenden einer Methode zum Verwalten von Stromkollisionen auf die Ressourcen, bei denen die Auslastungsrate n größer als eins ist, (308).

2. Verfahren nach Anspruch 1, **dadurch gekennzeichnet, dass** das drahtlose Kommunikationsnetz ein Multi-Hop-Ad-hoc-Netzwerk ist, das eine Technik des kooperativen Weiterleitens oder des kooperativen Rundsendens verwendet.

3. Verfahren nach Anspruch 1 oder 2, **dadurch gekennzeichnet, dass** als Ressourcen RBi auf einem oder mehreren Frequenzkanälen Zeitschlitze mit Zeitmultiplexmehrfachzugriff verwendet werden.

4. Verfahren nach Anspruch 1 oder 2, **dadurch gekennzeichnet, dass** als Ressourcen auf einem oder mehreren Frequenzteilbändern Zeitschlitze mit Zeitmultiplexmehrfachzugriff verwendet werden, wie OFDMA-Systeme oder vorcodierte OFDMA-Systeme.

5. Verfahren nach Anspruch 1 oder 2, **dadurch gekennzeichnet, dass** als Ressourcen RBi auf einem oder mehreren Codes und/oder auf einer oder mehreren Schichten und/oder Raumstrahlen Zeitschlitze mit Zeitmultiplexmehrfachzugriff verwendet werden.

6. Verfahren nach einem der Ansprüche 1 bis 5, **dadurch gekennzeichnet, dass** der Satz von verfügbaren Signaturen in allen Knoten vorkonfiguriert ist.

7. Verfahren nach einem der Ansprüche 1 bis 5, **dadurch gekennzeichnet, dass** der Satz von verfügbaren Signaturen von den Knoten dynamisch bestimmt wird.

8. Verfahren nach Anspruch 7, **dadurch gekennzeichnet, dass** sich der Satz von Signaturen zeitlich oder frequenzmäßig gemäß einer allen Knoten bekannten Pseudozufallssequenz entwickelt.

9. Verfahren nach einem der Ansprüche 1 bis 5, **dadurch gekennzeichnet, dass** die Zuweisung einer Signatur zu einem Strom unter Verwendung einer aus gemeinsamen Parametern berechneten Pseudozufallssequenz vorbestimmt wird.

10. Verfahren nach einem der Ansprüche 1 bis 9, **dadurch gekennzeichnet, dass** die Kollisionsverwaltungsmethode eine Kollisionsvermeidungsmethode ist, die mindestens die folgenden Schritte aufweist:
- Überprüfen, im Speicher eines Knotens, der Pakete von konkurrierenden Strömen, die bereits korrekt decodiert wurden (308a), der Kombinationen von Paketen der konkurrierenden Ströme, die bereits von dem Knoten korrekt decodiert wurden,
- Versuchen, die Kombination von Paketen, die den konkurrierenden Strömen auf der aktuellen Ressource RBcomp entspricht, aus Paketen oder Kombinationen von Paketen zu bilden, die im Speicher vorhanden sind und vom Knoten korrekt decodiert wurden (308b),
- wenn die Kombination gebildet ist, Übertragen der Kombination von Paketen, die den konkurrierenden Strömen auf der aktuellen Ressource RBcomp entspricht, (308c),
- wenn nicht, Horchen, um eine Kombination von Paketen zu decodieren, die den konkurrierenden Strömen auf der aktuellen Ressource RBcomp entspricht, wobei die Kombination eventuell von anderen Knoten des Netzes übertragen wird und, wenn die Decodierung korrekt ist, Speichern dieser Kombination von decodierten Paketen im Speicher, (308d).

11. Verfahren nach Anspruch 10, **dadurch gekennzeichnet, dass** die Kombination der Pakete der Ströme durch bitweises Anwenden von exklusiv-oder "XOR" auf die durch den Knoten decodierten Pakete durchgeführt wird.

12. Verfahren nach Anspruch 10, **dadurch gekennzeichnet, dass** die Kombination der Pakete der Ströme durch Anwenden einer Netzcodierungstechnik auf der physischen Schicht erfolgt, die die den betreffenden Paketen entsprechenden Basisbandsignale kombiniert.

13. Verfahren nach einem der Ansprüche 1 bis 6, **dadurch gekennzeichnet, dass** die Kollisionsverwaltungsmethode eine Interferenzunterdrückungsmethode ist, die mindestens die folgenden Schritte aufweist:
- Überprüfen, im Speicher eines Knotens, welche Pakete der konkurrierenden Ströme bereits korrekt decodiert wurden, (406),
- Anwenden einer Entscheidungsfunktion zwischen Horchen oder Übertragen von Strömen in Abhängigkeit der Anzahl der Pakete der konkurrierenden Ströme, die bereits decodiert und im Speicher vorhanden sind, und der Übertragungsrichtlinie, (407),
- wenn der Knoten horcht, Speichern der von den anderen Knoten zur konkurrierenden Ressource RBcomp gesendeten und vom Knoten decodierten Pakete, (408), und Anwenden, an der physischen Schicht, einer Mehrbenutzerempfangstechnik durch Interferenzunterdrückung,
- wenn der Knoten überträgt, Übertragen des Pakets des gespeicherten Stroms in Abhängigkeit von der Übertragungsrichtlinie des Stroms (409).

14. Verfahren nach Anspruch 13, **dadurch gekennzeichnet, dass** die Wahl an einem Knoten zwischen Horchen und Übertragen in Abhängigkeit von mindestens einer der folgenden Informationen erfolgt:
- der Priorität der Datenströme,
- dem Energieverbrauch des Knotens,
- dem Batteriestand des Knotens,
- einer Übertragungswahrscheinlichkeit, die zum Verringern der Kollisionswahrscheinlichkeit angewendet wird,
- der Art und Funktion des Knotens.

15. Verfahren nach Anspruch 13 oder 14, **dadurch gekennzeichnet, dass** die Pakettrennungs- und -erkennungs-/-decodierungsmethode gemäß einer seriellen Interferenzunterdrückungsmethode durchgeführt wird.

16. Verfahren nach Anspruch 13 oder 14, **dadurch gekennzeichnet, dass** die Wahl des zu übertragenden Stroms für einen Knoten in Abhängigkeit von den dem Strom zugeordneten Dienstqualitätsinformationen, seiner mit einer Nachbarschafts-/Dichteinformation gekoppelten Aktivitätsrate erfolgt.

17. Verfahren nach einem der Ansprüche 13 bis 15, **dadurch gekennzeichnet, dass** das übertragene Paket aus einer Kombination der im Speicher vorhandenen decodierten Pakete resultiert.

18. Verfahren nach einem der Ansprüche 7 bis 16, **dadurch gekennzeichnet, dass** jeder Sendeknoten mit einer Richtlinie zur Sendung, Leistungsregelung und Anpassung von Eigenschaften des gesendeten Signals sendet, die in Abhängigkeit von der Zeit/Frequenz-Synchronisationsqualität, dem Knotentyp und dem Stand seiner Batterie gegeben sind.

19. System zur Paketübertragung in einem drahtlosen Kommunikationsnetz, wobei das Kommunikationsnetz mehrere Knoten umfasst, die auf einen oder mehrere Ströme Fi abonniert sind und sich eine oder mehrere Ressourcen RBi zum Übertragen dieser Ströme mit Kollisionsmöglichkeiten teilen, wobei ein oder mehrere Knoten eine Rolle als Paketsendequelle eines oder mehrerer unterschiedlicher Ströme spielen, wobei jeder Strom Fi eine Ressourcenzuweisungssignatur Si aufweist, die einem Satz G(Si) von verfügbaren Signaturen Si entnommen wird, wobei jede Ressource Ri eine Auslastungsrate n entsprechend einer Anzahl zugewiesener Ströme aufweist, **dadurch gekennzeichnet, dass** jeder der Knoten N₁,...N₆ einen Sender/Empfänger (21, 22) in Verbindung mit einem zum Ausführen der Schritte des Verfahrens nach einem der Ansprüche 1 bis 18 konfigurierten Prozessor (23) und eine Datenbank (24) zum Speichern der Signaturen umfasst.
